# EUROPEAN PATENT APPLICATION

(11) **EP 4 607 236 A1**
(43) Date of publication of application: **27.08.2025**
(21) Application number: 23879509.0
(22) Date of filing: 08.09.2023
(51) Int. Cl.: G01S 7/481, G01S 17/89

(54) **OPTICAL SENSOR AND LIGHT RECEPTION MODULE**

(30) Priority: 21.10.2022 JP 2022169375
(71) Applicant: DENSO CORPORATION, Kariya-city, Aichi 448-8661 (JP)
(72) Inventor: ONDA Kazuhisa, Kariya-city Aichi 448-8661 (JP); KIYONO Mitsuhiro, Kariya-city Aichi 448-8661 (JP)
(74) Representative: Kuhnen & Wacker Patent- und Rechtsanwaltsbüro PartG mbB
(86) International application number: PCT/JP2023/032851
(87) International publication number: WO 2024/084859

(57) **Abstract**

An optical sensor includes: a light receiving optical system that defines a first reference plane (S1) and a second reference plane (S2) perpendicular to each other as a reference, applies positive power different on the reference planes (S1, S2) to a reflected beam longitudinal along the first reference plane (S1), and attenuates a transmittance of the reflected beam as a function of distance from an optical axis (ROA) along the second reference plane (S2); an aperture unit that is aligned with a focal point on the second reference plane (S2) by the light receiving optical system and forms an optical aperture along the first reference plane (S1) to transmit the reflected beam subjected to an optical effect by the light receiving optical system; and a light receiving unit that is aligned with a focal point on the first reference plane (S1) by the light receiving optical system and includes a plurality of light receiving elements arrayed in two-dimensional directions along the reference planes (S1, S2) to receive the reflected beam transmitted through the optical aperture.

## Description

### CROSS REFERENCE TO RELATED APPLICATION

This application is based on Japanese Patent Application No. 2022-169375 filed on October 21, 2022, the entire disclosure of which is incorporated herein by reference.

### TECHNICAL FIELD

The present disclosure relates to an optical sensor and a light reception module applied thereto.

### BACKGROUND ART

An optical sensor disclosed in Patent Literature 1 performs sensing by emitting an emission beam towards a sensing area in an external field and receiving a reflected beam of the emission beam from the sensing area.

### PRIOR ART LITERATURE

### PATENT LITERATURE

Patent Literature 1: US 10663586 B2

### SUMMARY OF INVENTION

The optical sensor disclosed in Patent Literature 1 ensures a dynamic range by transmitting reflected beams of the emission beams, which have been emitted in a dot pattern from multiple light sources, through multiple openings of an aperture element and receiving the reflected beams transmitted through the openings at multiple light receiving elements in a light receiving unit. However, a light receiving area capable of receiving the reflected beams on an array surface on which the light receiving elements are arrayed is divided into dots corresponding to the respective emission beams, resulting in a decrease in resolution.

An object of the present disclosure is to provide an optical sensor that ensures a dynamic range together with resolution, and a light reception module therefor.

Technical means of the present disclosure for solving an issue will be described below.

An optical sensor according to a first aspect of the present disclosure is to perform sensing by emitting a line-shaped emission beam towards a sensing area in an external field and receiving a reflected beam of the emission beam from the sensing area on an optical axis, and the optical sensor includes:
a light receiving optical system that defines a first reference plane and a second reference plane perpendicular to each other as a reference, and applies positive power different on the first reference plane and the second reference plane to the reflected beam that is longitudinal along the first reference plane, and that is configured to attenuate a transmittance of the reflected beam as a function of distance from the optical axis along the second reference plane;
an aperture unit that is aligned with a focal point on the second reference plane by the light receiving optical system and forms an optical aperture along the first reference plane to transmit the reflected beam that has been subjected to an optical effect by the light receiving optical system; and
a light receiving unit that aligned with a focal point on the first reference plane by the light receiving optical system and includes a plurality of light receiving elements to receive the reflected beam having transmitted through the optical aperture, the plurality of light receiving elements being arrayed in two-dimensional directions along the first reference plane and the second reference plane.

A light reception module according to a second aspect of the present disclosure is applied to the optical sensor according to the first aspect, and has a configuration in which the light receiving optical system is packaged together with the light receiving unit and the aperture unit.

According to these first and second aspects, the aperture unit, which is aligned with the focal point on the second reference plane by the light receiving optical system, has the optical aperture, which allows the reflected beam having been subjected to an optical effect by the light receiving optical system to transmit, along the first reference plane. Therefore, the light receiving unit, which is aligned with the focal point on the first reference plane by the light receiving optical system, receives the reflected beam that has transmitted through the optical aperture by using the plurality of light receiving elements arrayed in the two-dimensional directions along the first reference plane and the second reference plane. According to this configuration, a light receiving area capable of receiving the reflected beam transmitted through the optical aperture in response to the line-shaped emission beam can be continuous in a direction along the first reference plane in the light receiving unit. Therefore, it is possible to ensure the resolution in the light receiving unit.

Moreover, the light receiving optical system according to the first and second aspects attenuates the transmittance of the reflected beam as the function of distance from the optical axis along the second reference plane. The reflected beam that has thus been subjected to the transmittance attenuation effect can be received by the light receiving unit with an intensity distribution in the direction along the second reference plane while suppressing intrusion of external light in the direction along the first reference plane as it transmits through the optical aperture of the aperture unit. Therefore, it is possible to ensure the dynamic range to be compatible with the resolution in the light receiving unit.

### BRIEF DESCRIPTION OF DRAWINGS

FIG. 1 is a schematic diagram showing an overall configuration of an optical sensor according to a first embodiment.
FIG. 2 is a schematic diagram showing an emitting section and a scanning unit according to the first embodiment.
FIG. 3 is a schematic diagram showing a light receiving section and the scanning unit according to the first embodiment.
FIG. 4 is an enlarged schematic diagram showing the emitting section according to the first embodiment.
FIG. 5 is an enlarged schematic diagram showing the light receiving section according to the first embodiment.
FIG. 6 is an enlarged schematic diagram showing the light receiving section according to the first embodiment.
FIG. 7 is a graph showing characteristics of the light receiving section according to the first embodiment.
FIG. 8 is an enlarged schematic diagram showing the light receiving section according to the first embodiment.
FIG. 9 is a schematic diagram showing the light receiving section according to the first embodiment.
FIG. 10 is a schematic diagram showing the light receiving section according to the first embodiment.
FIG. 11 is a graph showing characteristics of the light receiving section according to the first embodiment.
FIG. 12 is a schematic diagram showing an overall configuration of an optical sensor according to a second embodiment.
FIG. 13 is a schematic diagram showing a light receiving section and a scanning unit according to the second embodiment.
FIG. 14 is a schematic diagram showing an overall configuration of an optical sensor according to a third embodiment.
FIG. 15 is a schematic diagram showing a light receiving section and a scanning unit according to the third embodiment.
FIG. 16 is an enlarged schematic diagram showing the light receiving section according to the third embodiment.
FIG. 17 is a schematic diagram showing an overall configuration of an optical sensor according to a fourth embodiment.
FIG. 18 is a schematic diagram showing a light receiving section and a scanning unit according to the fourth embodiment.
FIG. 19 is a schematic diagram showing an overall configuration of an optical sensor according to a fifth embodiment.
FIG. 20 is a schematic diagram showing a light receiving section and a scanning unit according to the fifth embodiment.
FIG. 21 is a schematic diagram showing a light receiving section and a scanning unit according to a modified example of the second embodiment.

### DESCRIPTION OF EMBODIMENTS

Hereinafter, several embodiments of the present disclosure will be described with reference to the drawings. In the description of each of the embodiments, the same reference numerals are used to designate corresponding components, and duplicated explanations may be omitted. Further, in cases where only a portion of the configuration is described in each embodiment, the configurations of other embodiment(s) previously described can be applied to the other portions of the configuration. Furthermore, in addition to the combinations of configurations explicitly stated in the description of each embodiment, configurations of multiple embodiments may be partially combined together even if not explicitly stated, provided that there is no particular problem with the combination.

### (First Embodiment)

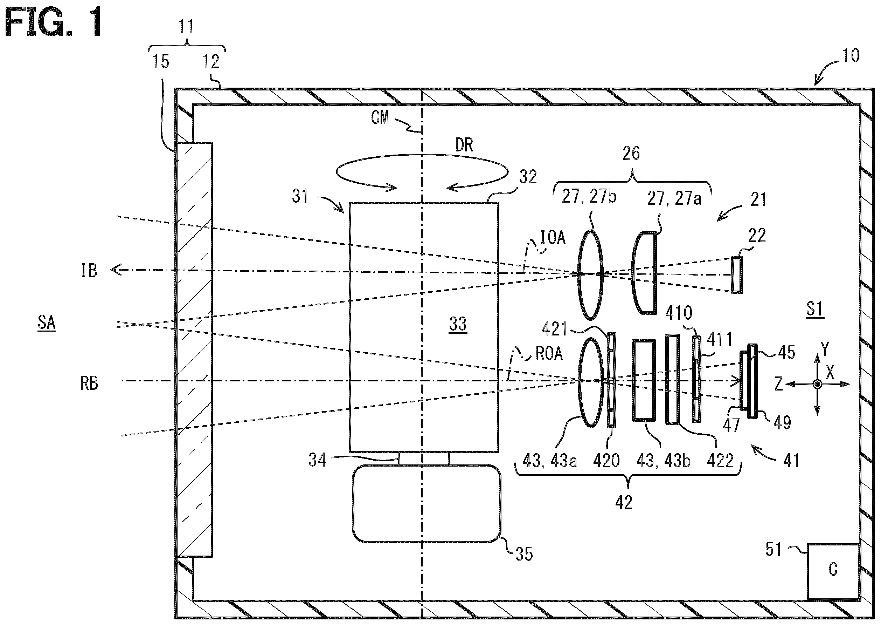

As shown in FIG. 1, an optical sensor 10 according to a first embodiment of the present disclosure is a LiDAR (Light Detection and Ranging/Laser Imaging Detection and Ranging) sensor mounted on a vehicle as a movable body. In the following description, unless otherwise specified, the directions indicated as front, rear, up, down, left, and right are defined with respect to the vehicle on a horizontal plane. Moreover, the horizontal direction indicates a tangential direction to a horizontal plane, and the vertical direction indicates a direction perpendicular to the horizontal plane.

The optical sensor 10 is disposed in at least one location on the vehicle, such as in a front portion, in a left or right side portion, in a rear portion, or on an upper roof. The optical sensor 10 emits a beam IB toward a sensing area SA in an external field of the vehicle, the sensing area SA being provided to correspond to the location where the optical sensor 10 is disposed on the vehicle. The optical sensor 10 performs sensing by receiving a reflected beam RB of the emission beam IB emitted to the sensing area SA and reflected by a target within the sensing area SA. Therefore, light in a near-infrared range, which is difficult for human in the external field to see, is usually selected for the emission beam IB that becomes the reflected beam RB.

The optical sensor 10 receives the reflected beam RB and senses the target within the sensing area SA. Here, sensing of the target includes at least one of the following: a distance from the optical sensor 10 to the target, a direction in which the target exists, or a reflection intensity of the reflected beam RB from the target. In particular, the target that is an object to be sensed by the optical sensor 10 applied to a vehicle may be one or more kinds of moving objects, such as pedestrians, cyclists, non-human animals, or other vehicles. Also, the target that is an object to be sensed by the optical sensor 10 applied to a vehicle may be one or more kinds of stationary objects, such as guardrails, road signs, roadside structures, and objects fallen on the road.

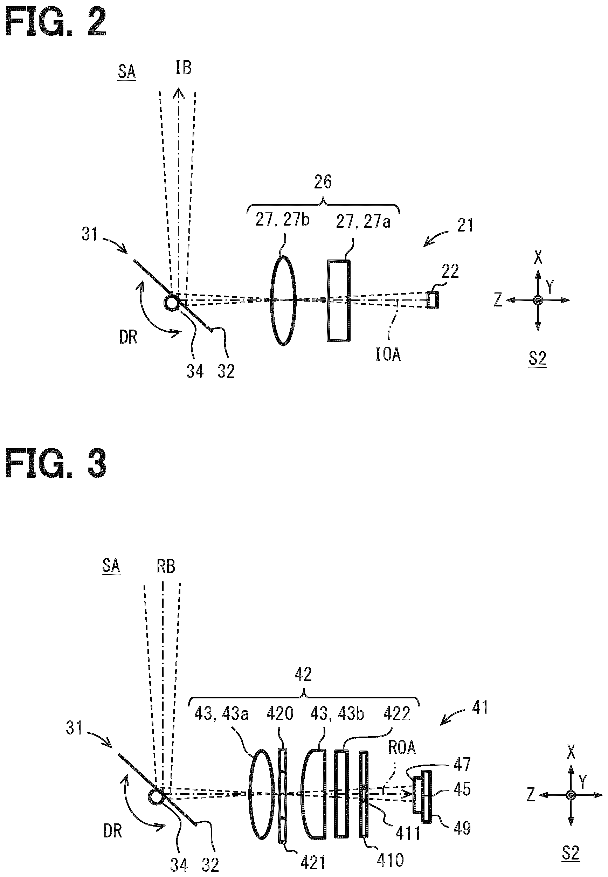

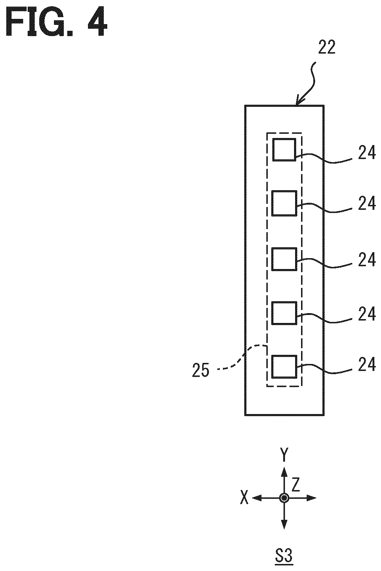

In the optical sensor 10, a three-dimensional orthogonal coordinate system is defined by an X-axis, a Y-axis, and a Z-axis which are three axes perpendicular to each other. In particular, in the optical sensor 10 applied to a vehicle, the Y-axis direction is set to the vertical direction of the vehicle. In addition, in the optical sensor 10 applied to a vehicle, the X-axis direction and the Z-axis direction are set to different horizontal directions of the vehicle. As shown in FIGS. 1, 5 and 6, a first reference plane S1 serving as a reference in the optical sensor 10 is defined as a so-called tangential plane on a YZ plane including the Y-axis and the Z-axis. In addition, as shown in FIGS. 2, 3, 5 and 6, a second reference plane S2 serving as a reference perpendicular to the first reference plane S1 in the optical sensor 10 is defined on an XZ plane including the X-axis and the Z-axis. Furthermore, as shown in FIGS. 4 to 6, a third reference plane S3 serving as a reference perpendicular to the first reference plane S1 and the second reference plane S2 in the optical sensor 10 is defined on an XY plane including the X-axis and the Y-axis.

As shown in FIGS. 1 to 3, the optical sensor 10 includes a housing 11, an emitting section 21, a scanning unit 31, a light receiving section 41, and a control unit 51. The housing 11 forms an exterior of the optical sensor 10, as shown in FIG. 1. The housing 11 includes a light-shielding case 12 and a cover panel 15. Note that FIG. 1 shows a cross section in which the part on a left side from a dotted and dashed line in the Y-axis direction (the cover panel 15 side) is actually perpendicular to the part on a right side from the dotted and dashed line (the emitting section 21 side and the light receiving section 41 side).

The light-shielding case 12 is made of a material, such as synthetic resin or metal, that has a light-shielding property. The light-shielding case 12 has a box-like shape as a whole. The light-shielding case 12 is composed of a single component or multiple components coupled to each other. The light-shielding case 12 accommodates the emitting section 21, the scanning unit 31, and the light receiving section 41 therein. Furthermore, the light-shielding case 12 may accommodate the control unit 51 therein, as shown in FIG. 1.

The cover panel 15 is made mainly of a base material, such as synthetic resin or glass, that is transparent to a light in a near-infrared range. The cover panel 15 has a flat plate shape or a curved shape as a whole. The cover panel 15 entirely covers a through-hole provided in the light-shielding case 12.

As shown in FIGS. 1 and 2, the emitting section 21 includes a light projecting unit 22 and an emission optical system 26. The light projecting unit 22 is disposed in the housing 11 and emits a laser beam in the near-infrared range, which becomes the emission beam IB. For this purpose, as shown in FIG. 4, the light projecting unit 22 has a plurality of laser oscillation elements 24 on a light projection array substrate. The laser oscillation elements 24 are arranged one-dimensionally in a single row along the Y-axis direction. Each of the laser oscillation elements 24 is, for example, an edge emitter laser or a surface emitting laser. Each of the laser oscillation elements 24 emits a laser beam that becomes a part of the emission beam IB.

The light projecting unit 22 has a light projection window 25 that is pseudo-defined to have a rectangular outline longitudinal in the Y-axis direction on one side of the light projection array substrate. The light projection window 25 is configured as an assembly of laser oscillation apertures of the laser oscillation elements 24. As a result, the laser beams output from the laser oscillation apertures of the laser oscillation elements 24 are projected from the light projection window 25 and are simulated as the emission beam IB that is in a line shape longitudinal in the Y-axis direction in the sensing area SA shown in FIG. 1. The emission beam IB within the housing 11 may include non-light-emitting portions corresponding to the arrangement intervals of the laser oscillation elements 24 in the Y-axis direction. Even in this case, it is preferable that the line-shaped emission beam IB, in which non-light-emitting portions are eliminated macroscopically by the optical effect of the emission optical system 26 described later, is formed in the sensing area SA.

As shown in FIGS. 1 and 2, the emission optical system 26 is disposed in the housing 11 between the light projecting unit 22 and a scanning mirror 32 of the scanning unit 31. The emission optical system 26 projects the emission beam IB from the light projecting unit 22 toward the scanning mirror 32. For this purpose, the emission optical system 26 guides the emission beam IB projected from the light projection unit 22 onto the scanning mirror 32 on an emission optical axis IOA along the Z-axis direction. In order to realize such light guiding, the emission optical system 26 has an emission lens 27 held by the light-shielding case 12. The emission lens 27 is mainly made of a lens material, such as synthetic resin or glass, that is transparent to a light in the near-infrared range.

Here, in particular, as the emission lens 27 of the first embodiment, a pair of a cylindrical lens 27a on an upstream side and a rotationally symmetric lens 27b on a downstream side is selected. The cylindrical lens 27a is a plano-convex cylindrical lens that has a generatrix direction in the X-axis direction and a positive power direction in the Y-axis direction. The rotationally symmetric lens 27b is a biconvex lens that has a positive power direction in an arbitrary direction around the Z axis. The emission optical system 26 applies positive power different in the Y-axis direction and the X-axis direction to the emission beam IB by the combination of the cylindrical lens 27a and the rotationally symmetric lens 27b.

As shown in FIGS. 1 to 3, the scanning unit 31 includes a scanning mirror 32 and a scanning motor 35. The scanning mirror 32 is disposed, within the housing 11, to extend from an area between the cover panel 15 and the emission optical system 26 to an area between the cover panel 15 and the light receiving optical system 42 of the light receiving section 41. The scanning mirror 32 scans the emission beam IB projected from the emission optical system 26 toward the sensing area SA, and reflects the reflected beam RB from the sensing area SA in response to the emission beam IB toward the light receiving optical system 42.

The scanning mirror 32 is mainly made of a base material such as synthetic resin or glass. The scanning mirror 32 has a flat plate shape as a whole. The scanning mirror 32 has a reflecting surface 33 having a rectangular outline, which is longitudinal in the Y-axis direction, by depositing a reflective film of, for example, aluminum, silver, or gold onto one side of the mirror base material.

The scanning mirror 32 has a rotation shaft 34 that is rotatably supported by the light-shielding case 12. The rotation axis 34 is disposed so as to extend in the Y-axis direction along which the reflecting surface 33 is longitudinal. The scanning mirror 32 rotates around a rotation center line CM extending in the Y-axis direction, thereby adjusting the normal direction of the reflecting surface 33 to be around the rotation center line CM. For this purpose, the scanning mirror 32 is allowed to oscillate within a finite rotation angle range DR by means of, for example, a mechanical or electrical stopper or the like. This restricts the emission beam IB reflected by the scanning mirror 32 not to deviate from the outer contour of the cover panel 15.

The scanning mirror 32 is provided to be shared by the emitting section 21 and the light receiving section 41. Therefore, the reflecting surface 33 of the scanning mirror 32 is provided in common to the emission beam IB and the reflected beam RB. On the reflecting surface 33, a section that reflects the emission beam IB and a section that reflects the reflected beam RB are configured to be separated from each other or to overlap each other at least at a part.

As shown in FIGS. 1 and 2, the emission beam IB is reflected on the reflecting surface 33, whose normal direction is adjusted in accordance with the rotational drive of the scanning mirror 32, thereby transmitting through the cover panel 15 and scanning the sensing area SA in time and space. The scanning of the emission beam IB on the sensing area SA is substantially limited to scanning in the horizontal direction in response to the rotational drive of the scanning mirror 32 about the rotation center line CM. As a result, the rotation angle range DR of the scanning mirror 32 defines the horizontal angle of view in the sensing area SA.

The emission beam IB is reflected by a target present in the sensing area SA, and becomes the reflected beam RB that returns to the optical sensor 10. The reflected beam RB transmits through the cover panel 15 again and is incident on the reflecting surface 33 of the scanning mirror 32. In this case, the velocities of the emission beam IB and the reflected beam RB are sufficiently large relative to the rotational speed of the scanning mirror 32. As a result, the reflected beam RB can be assumed and simulated to be guided to the light receiving optical system 42 in the opposite direction to the emission beam IB by being reflected on the reflecting surface 33 of the scanning mirror 32, which has approximately the same rotation angle as the emission beam IB.

As shown in FIG. 1, the scanning motor 35 is disposed around the scanning mirror 32 in the housing 11. The scanning motor 35 is, for example, a voice coil motor, a brushed DC motor, or a stepping motor. An output shaft of the scanning motor 35 is coupled directly to a rotation shaft 34 of the scanning mirror 32 or indirectly via a drive mechanism such as a reducer. The scanning motor 35 is held by the light-shielding case 12 so as to be capable of rotating the rotation shaft 34 together with the output shaft. The scanning motor 35 drives the rotation shaft 34 to rotate within a rotation angle range DR.

As shown in FIGS. 1 and 3, the light receiving section 41 includes the light receiving optical system 42 and a light receiving unit 45. The light receiving optical system 42 is disposed in the housing 11 between the scanning mirror 32 and the light receiving unit 45. The light receiving optical system 42 is positioned below the emission optical system 26 in the Y-axis direction.

The light receiving optical system 42 focuses the reflected beam RB from the scanning mirror 32 onto the light receiving unit 45. For this purpose, the light receiving optical system 42 causes the light receiving unit 45 to receive the reflected beam RB reflected from the scanning mirror 32 on a light receiving optical axis ROA in the Z-axis direction. At this time, the reflected beam RB is the line-shaped beam in the near-infrared range longitudinal in the Y-axis direction corresponding to the emission beam IB, and is subjected to a light-guiding effect along the light receiving optical axis ROA over the entire rotation angle range DR of the scanning mirror 32. For this purpose, the light receiving optical system 42 has a light receiving lens 43 held by the light-shielding case 12. The light receiving lens 43 is mainly made of a lens material, such as synthetic resin or glass, that is transparent to a light in the near-infrared range.

Here, in particular, as the light receiving lens 43 in the first embodiment, a pair of a rotationally symmetric lens 43a on an upstream side and a cylindrical lens 43b on a downstream side is selected. The rotationally symmetric lens 43a is a biconvex lens that has a positive power direction in an arbitrary direction around the Z axis. The cylindrical lens 43b is a plano-convex cylindrical lens that has a generatrix direction in the Y-axis direction and a positive power direction in the X-axis direction. The light receiving optical system 42 applies positive power different in the Y-axis direction and the X-axis direction to the reflected beam RB that is longitudinal in the Y-axis direction by the combination of the rotationally symmetric lens 43a and the cylindrical lens 43b. That is, when the first reference plane S1 and the second reference plane S2, which are perpendicular to each other, are defined as references, the light receiving optical system 42 applies the positive power different on the first reference plane S1 and the second reference plane S2 to the reflected beam RB that is longitudinal along the first reference plane S1.

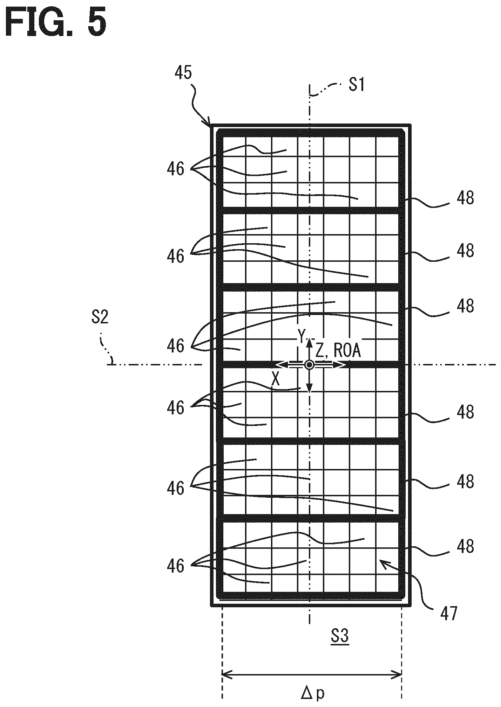

The light receiving unit 45 is positioned below the light projecting unit 22 in the Y-axis direction in the housing 11. The light receiving unit 45 receives the reflected beam RB, which is focused by the light receiving optical system 42, and outputs a light receiving signal. For this purpose, as shown in FIG. 5, the light receiving unit 45 has a plurality of light receiving elements 46 on a light receiving array substrate. The light receiving elements 46 are arrayed two-dimensionally in a plurality of rows in the Y-axis direction and the X-axis direction. That is, the light receiving elements 46 are arrayed in two-dimensional directions along the first reference plane S1 and the second reference plane S2.

As shown in FIGS. 1, 3, and 5, the light receiving surface of the light receiving unit 45 on which the light receiving elements 46 are arrayed to receive the reflected beam RB is formed on one side of the light receiving array substrate as an array surface 47, and has a rectangular contour that is perpendicular to the Z-axis direction and is longitudinal in the Y-axis direction. That is, in the light receiving unit 45, the array surface 47 of the light receiving elements 46 is positioned in an orientation along the third reference plane S3 that is perpendicular to the first reference plane S1 and the second reference plane S2 as a reference. Such an array surface 47 is configured as an assembly of the incident surfaces of the light receiving elements 46.

In the light receiving unit 45, each light receiving element 46 is mainly composed of a single photon avalanche diode (SPAD). In this case, the light receiving unit 45 is provided with a plurality of light receiving pixels 48, each pixel 48 including a set number of the light receiving elements 46 as a unit for reading out the light receiving signal from the light receiving elements 46 and being surrounded by a thick line in FIG. 5. Here, each light receiving pixel 48 is composed of the plurality of light receiving elements 46 which are different in numbers in the Y-axis direction and the X-axis direction, and in the first embodiment in particular, the light receiving pixels 48 are arrayed one-dimensionally in a single row in the Y-axis direction. That is, on the array surface 47 of the light receiving unit 45, the light receiving pixels 48 are arrayed in a one-dimensional direction along the first reference plane S1.

In the light receiving unit 45 having such a configuration, in each light receiving pixel 48, the signal value of the light receiving signal changes in accordance with the number of responses of the light receiving elements 46 that respond to the reflected beam RB. In the light receiving unit 45, which bundles such light receiving signals in units of the set number of light receiving elements 46 for each light receiving pixel 48, it is possible to increase the dynamic range by using a detailed configuration which will be described later. Therefore, as shown in FIGS. 1 and 3, the light receiving unit 45 has an output circuit 49 for sampling the light receiving signals read out from the light receiving pixels 48 each having the set number of light receiving elements 46 and outputting the light receiving signals to the control unit 51.

The control unit 51 shown in FIG. 1 controls sensing of a target in the sensing area SA. The control unit 51 is configured mainly by at least one computer including a processor and a memory. The control unit 51 may be entirely accommodated in the housing 11 (as an example in FIG. 1). The control unit 51 may be disposed entirely outside the housing 11 on the vehicle. The control unit 1 may be arranged in a disperse manner over the inside of the housing 11 and the outside the housing 11 but on the vehicle.

The control unit 51 is connected to the light projecting unit 22, the scanning motor 35, and the light receiving unit 45. The control unit 51 rotates the scanning mirror 32 in synchronization with the emission timing of the emission beam IB from the light projecting unit 22, and controls the readout and output of the light receiving signals in the light receiving unit 45. As a result, the control unit 51 generates sensing data, such as image data, by sensing a target in the sensing area SA based on the light receiving signals output from the light receiving unit 45.

### (Detailed configuration)

Next, the detailed configuration of the light receiving section 41 will be described.

As shown in FIGS. 1, 3 and 6, in the light receiving section 41, the light receiving optical system 42 further includes an apodization element 420. The apodization element 420 is disposed in the housing 11 between the rotationally symmetric lens 43a, which is on an upstream side in the light receiving optical system 42, and the cylindrical lens 43b, which is on a downstream side in the light receiving optical system 42. The apodization element 420 is aligned at a conjugate point that is conjugate with the array surface 47 of the light receiving elements 46 in the light receiving unit 45.

The apodization element 420 is a flat apodization filter that is given an optical characteristic which distributes the transmittance in the near-infrared range. For this purpose, the apodization element 420 is made mainly of a filter substrate such as synthetic resin or glass, and has a transmittance distribution to the near-infrared range. The apodization element 420 is held by the light-shielding case 12 and expands to be perpendicular to the Z-axis direction. That is, the apodization element 420 in the light receiving optical system 42 is positioned along the third reference plane S3.

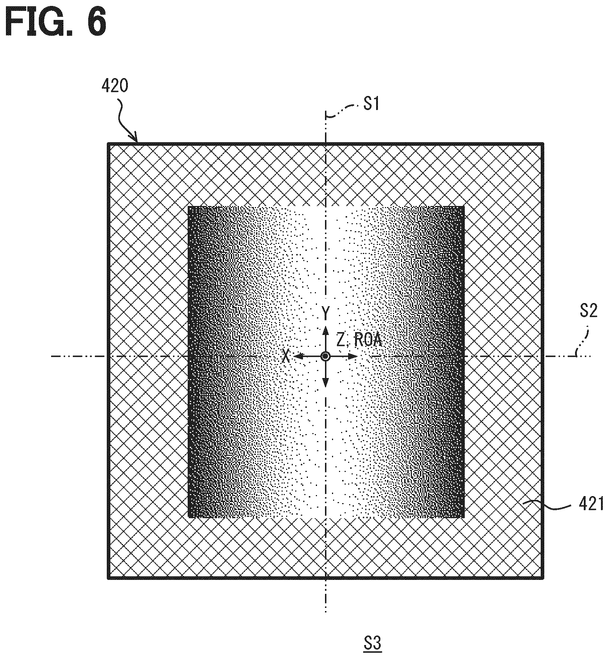

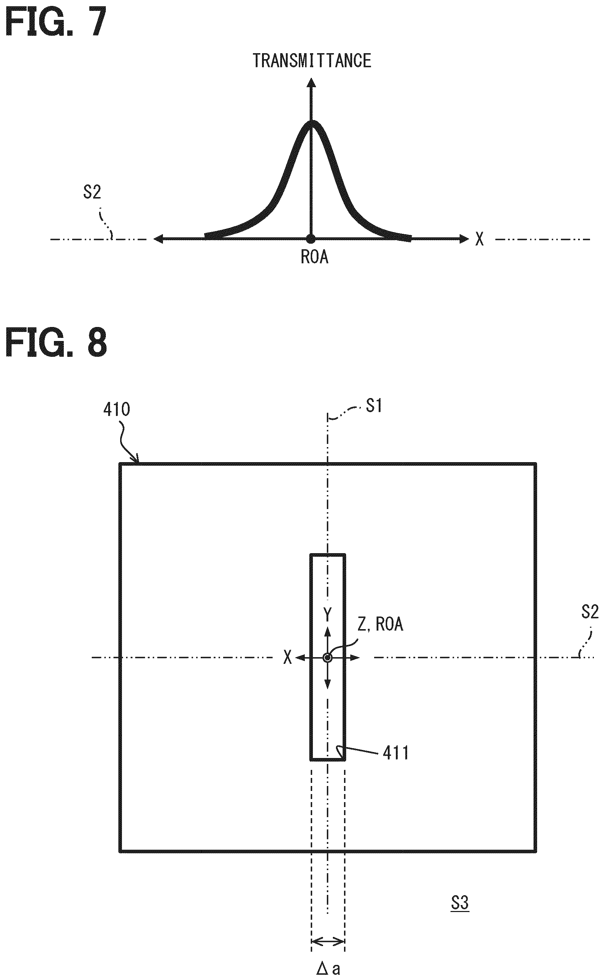

As shown in FIGS. 6 and 7, in the apodization element 420, the transmittance of the reflected beam RB decreases in a Gaussian distribution from the center on the light receiving optical axis ROA to the outer periphery in the X-axis direction. That is, the apodization element 420 in the light receiving optical system 42 attenuates the transmittance of the reflected beam RB as a function of distance from the light receiving optical axis ROA along the second reference plane S2. In this case, FIG. 6 shows the transmittance of the reflected beam RB in a grey scale that becomes lighter as it attenuates. However, in the apodization element 420 of the first embodiment, a frame-shaped outermost peripheral portion 421 shown with cross-hatching in FIG. 6 (see also the white illustration in FIGS. 1 and 3) is covered with a light-shielding film, so that the transmittance of the reflected beam RB is limited to substantially zero.

As shown in FIGS. 1 and 3, the light receiving optical system 42 in the light receiving section 41 further includes a bandpass element 422. The bandpass element 422 is disposed downstream of the cylindrical lens 43b of the light receiving optical system 42 in the housing 11 and upstream of the light receiving unit 45.

The bandpass element 422 is a flat bandpass filter that is given an optical characteristic to limit the transmission of the reflected beam RB, which has been subjected to the optical effect by the lenses 43a and 43b in the light receiving optical system 42, to the near-infrared range, which is the set band of the emission beam IB. For this purpose, the bandpass element 422 is made mainly of a filter substrate such as synthetic resin or glass, and is transparent to the near-infrared range while having substantially zero transmittance to other ranges. The bandpass element 422 is held by the light-shielding case 12 and expands to be perpendicular to the Z-axis direction. That is, the bandpass element 422 in the light receiving optical system 42 is positioned along the third reference plane S3 (see FIGS. 5 and 6).

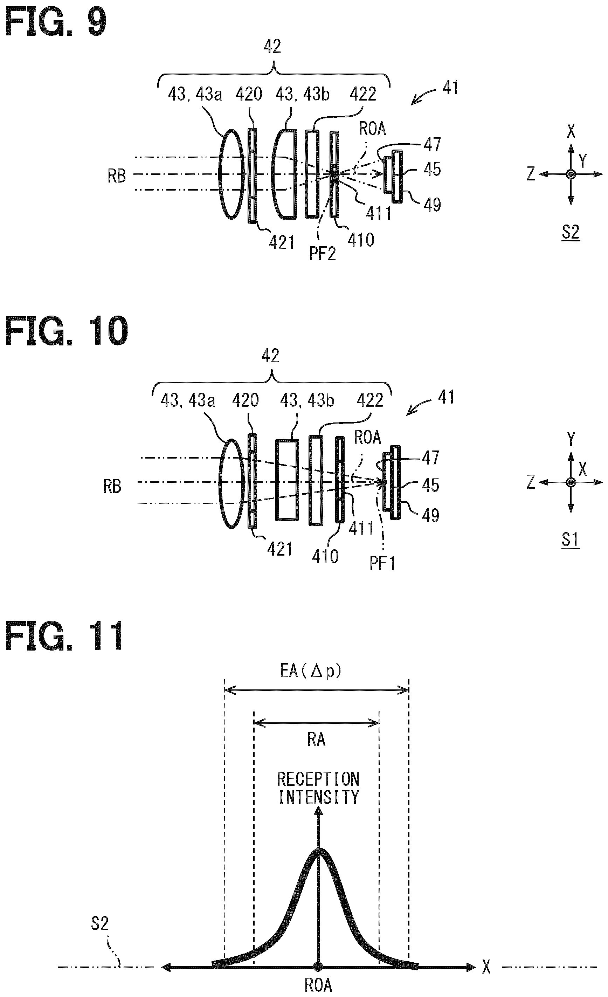

As shown in FIGS. 1, 3, 8 and 9, the light receiving section 41 is further provided with an aperture unit 410. The aperture unit 410 is disposed in the housing 11 between the bandpass element 422, which is at a downstream-most position in the light receiving optical system 42, and the light receiving unit 45. As shown in FIG. 9, the aperture unit 410 is aligned with a focal point PF2 on the second reference plane S2 by the light receiving optical system 42, and in particular in the first embodiment, at a composite focal point of parallel beams by the lenses 43a and 43b on the second reference plane S2.

As shown in FIGS. 1, 3, 8 and 9, the aperture unit 410 is a flat optical diaphragm having an optical aperture 411 that is partially given a light transmittance to the near-infrared range. Such an aperture unit 410 may be made mainly of a light-transmitting base material, such as synthetic resin or glass, that is transparent to a light in the near-infrared range, and the surface of the light-transmitting base material in an outer peripheral area of the optical aperture 411 may be covered with a light-shielding film, such as a metal film, a resist film, a dielectric film, or a coating film. The aperture unit 410 may be made mainly of a light-shielding base material, such as synthetic resin or metal, so that the outer periphery of the optical aperture 411 penetrating the light-shielding base material has substantially zero transmittance.

The aperture unit 410 is held by the light-shielding case 12 and expands to be perpendicular to the Z-axis direction. That is, the aperture unit 410 in the light receiving optical system 42 is positioned along the third reference plane S3. The reflected beam RB that has been subjected to the optical effects from the elements 43a, 420, 43b, and 422 in the light receiving optical system 42 enters the optical aperture 411 formed in the aperture unit 410. The optical aperture 411 transmits the entering reflected beam RB to exit toward the light receiving unit 45 on the downstream side.

The optical aperture 411 in the aperture unit 410 has the rectangular contour longitudinal in the Y-axis direction. That is, the optical aperture 411 in the aperture unit 410 is formed along the first reference plane S1. When a size Δa (see FIG. 8) of the optical aperture 411 in the X-axis direction along the second reference plane S2 is defined as an allowable distance, the aperture unit 410 shown in FIG. 9 is aligned within the allowable distances defined on both sides of the focal point PF2 along the light receiving optical axis ROA on the second reference plane S2 by the light receiving optical system 42. The size Δa, which is the allowable distance under this definition, is preferably set to be equal to or greater than the focal depth on the second reference plane S2. The aperture unit 410 may be aligned within the focal depths on the second reference plane S2 defined on both sides of the focal point PF2 along the light receiving optical axis ROA on the second reference plane S2 by the light receiving optical system 42.

As shown in FIG. 10, in the light receiving section 41, the array surface 47 of the light receiving unit 45 is positioned at a focal point PF1 on the first reference plane S1 by the light receiving optical system 42, and particularly in the first embodiment, at a composite focal point of the parallel beams by the lenses 43a, 43b on the same plane S1. When a size Δp (see FIG. 5) of the light-receiving pixel 48 in the X-axis direction along the second reference plane S2 is defined as an allowable distance, the array surface 47 is aligned within the allowable distances defined on both sides of the focal point PF1 along the light receiving optical axis ROA on the first reference plane S1 by the light receiving optical system 42. The size Δp, which is the allowable distance under this definition, is preferably set to be equal to or greater than the focal depth on the first reference plane S1. The array surface 47 may be aligned within the focal depths defined on both sides of the focal point PF1 on the first reference plane S1 along the light receiving optical axis ROA, on the first reference plane S1 by the light receiving optical system 42.

With this configuration, in the light receiving unit 45, the reflected beam RB that has transmitted through the optical aperture 411 of the aperture unit 410 is received on the array surface 47 with an intensity distribution that corresponds to the transmittance distribution in the apodization element 420, as shown in FIG. 11. Therefore, in the X-axis direction along the second reference plane S2, a light receiving area RA, which is defined as the range in which the light receiving intensity distribution of the reflected beam RB is 1/e² of the peak intensity, is preferably adjusted to be smaller than an effective area EA that is effective on the array surface 47 according to the above-mentioned pixel size Δp (see also FIG. 5). Furthermore, based on this light receiving intensity distribution, the reflected beam RB with its peak intensity is used for sensing a long-distant target or a low-reflection target, while the base intensities near both ends of the light receiving area RA are used for sensing a short-distant target or a high-reflection target.

### (Advantageous Effects)

Advantageous effects of the first embodiment described above will be explained hereinafter.

According to the first embodiment, the aperture unit 410, which is aligned to the focal point PF2 on the second reference plane S2 by the light receiving optical system 42, has the optical aperture 411 to transmit the reflected beam RB that has been subjected to the optical effect from the light receiving optical system 42, and the optical aperture 411 is formed along the first reference plane S1. Therefore, the light receiving unit 45, which is aligned to the focal point PF1 on the first reference plane S1 by the light receiving optical system 42, receives the reflected beam RB that has transmitted through the optical aperture 411 by the multiple light receiving elements 46 arrayed in two-dimensional directions along the first reference plane S1 and the second reference plane S2. According to this, the light receiving area RA capable of receiving the reflected beam RB having transmitted through the optical aperture 411 in response to the line-shaped emission beam IB can be continuous in the Y-axis direction along the first reference plane S1 in the light receiving unit 45. Therefore, the resolution of the light receiving unit 45 can be ensured.

Moreover, the light receiving optical system 42 according to the first embodiment attenuates the transmittance of the reflected beam RB as it separates from the light receiving optical axis ROA along the second reference plane S2. The reflected beam RB, which has thus been subjected to the transmittance attenuation effect, can be received by the light receiving unit 45 with the intensity being distributed in the X-axis direction along the second reference plane S2, while the intrusion of external light is suppressed in the Y-axis direction along the first reference plane S1, as it transmits through the optical aperture 411 of the aperture unit 410. Therefore, it is possible to ensure the dynamic range that is compatible with the resolution of the light receiving unit 45.

According to the first embodiment, the apodization element 420, which attenuates the transmittance of the reflected beam RB as it separates from the light receiving optical axis ROA along the second reference plane S2, is aligned at the conjugate point with respect to the array surface 47 of the light receiving elements 46 in the light receiving unit 45. This allows the light receiving area RA for the reflected beam RB, which has the intensity distribution in the X-axis direction along the second reference plane S2, to be accurately formed on the array surface 47 of the light receiving elements 46. Therefore, it is possible to improve the reliability of the effect of ensuring the dynamic range.

According to the first embodiment, when the size Δa of the optical aperture 411 in the X-axis direction along the second reference plane S2 is defined as the allowable distance, the aperture unit 410 is aligned within the allowable distance along the light receiving optical axis ROA from the focal point PF2 on the second reference plane S2 by the light receiving optical system 42. According to this, the aperture unit 410 can accurately exert the optical effect of distributing the intensity in the X-axis direction along the second reference plane S2 to the reflected beam RB, to which the intrusion of external light in the Y-axis direction along the first reference plane S1 is suppressed. Therefore, it is possible to improve the reliability of the effect of ensuring the dynamic range.

The bandpass element 422 of the light receiving optical system 42 according to the first embodiment limits the transmission of the reflected beam RB to the set band of the emission beam IB. According to this, for the reflected beam RB having the intensity distribution in the X-axis direction along the second reference plane S2, not only the intrusion of external light in the Y-axis direction along the first reference plane S1 is suppressed by the aperture unit 410, but also the intrusion of external light intrusion is suppressed by limiting the transmission through the bandpass element 422. Therefore, it is possible to improve the reliability of the effect of ensuring the dynamic range.

According to the first embodiment, each of the plurality of light receiving pixels 48, which forms a unit for reading out the light receiving signal, includes a preset number of light receiving elements 46. Therefore, when the size Δp of the light receiving pixel 48 in the X-axis direction along the second reference plane S2 is defined as the allowable distance, the array surface 47 composed of the light receiving elements 46 in the light receiving unit 45 is aligned within the allowable distance along the light receiving optical axis ROA from the focal point PF1 on the first reference plane S1 by the light receiving optical system 42. According to this, the light receiving area RA capable of receiving the focused reflected beam RB can be formed continuously in the X-axis direction along the first reference plane S1 on the array surface 47 of the light receiving elements 46, which are provided with the set number for each light receiving pixel 48. Therefore, it is possible to improve the reliability of the effect of ensuring the resolution.

According to the first embodiment, the SPADs serving as the light receiving elements 46 are arrayed in the two-dimensional directions along the first reference plane S1 and the second reference plane S2. Therefore, it is possible to accurately ensure the dynamic range by making the light receiving elements 46 respond in accordance with the reflected beam RB having the intensity distribution, particularly in the direction along the second reference plane S2.

### (Second embodiment)

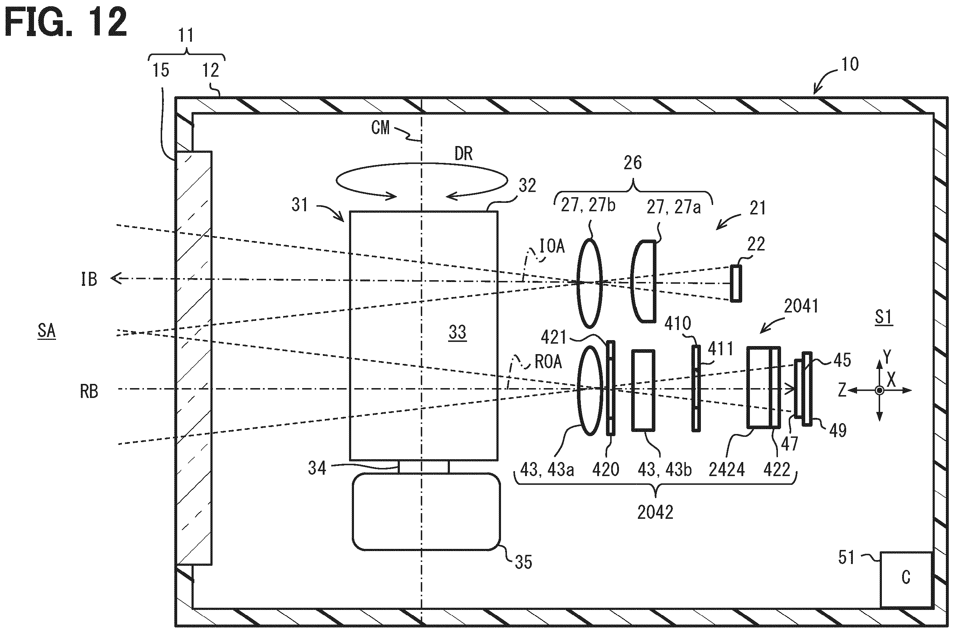

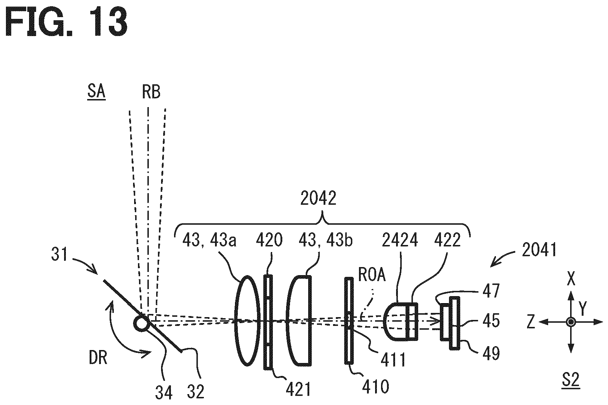

A second embodiment is a modified example of the first embodiment, as shown in FIGS. 12 and 13.

In a light receiving section 2041 of the second embodiment, the aperture unit 410 is arranged downstream of the cylindrical lens 43b and upstream of the bandpass element 422, in a light receiving optical system 2042 in the housing 11. As a result, the optical aperture 411 of the aperture unit 410 allows the reflected beam RB, which has been subjected to the optical effects by the elements 43a, 420, and 43b in the light receiving optical system 42, to transmit toward the bandpass element 422 and the light receiving unit 45.

A collimating element 2424 is added to the light receiving optical system 2042 of the second embodiment. The collimating element 2424 is disposed in the housing 11 at a position downstream of the aperture unit 410 and upstream of the bandpass element 422. The collimating element 2424 is a collimating lens that collimates the reflected beam RB transmitted through the aperture unit 410 into a substantially parallel beam or a beam approximate to the parallel beam, and then makes the beam enter the bandpass element 422.

The collimating element 2424 is made mainly of a lens material, such as synthetic resin or glass, that is transparent to a light in the near-infrared range. Therefore, the collimating element 2424 may be overlapped and joined to the bandpass element 422, which is made mainly of a filter substrate as in the first embodiment and disposed on a downstream side thereof. The collimating element 2424 may be covered with a filter film serving as the bandpass element 422 that is transparent to the light in the near-infrared range while having substantially zero transmittance to light in other ranges.

In particular, for the collimating element 2424 in the second embodiment, a plano-convex cylindrical collimating lens that has the generatrix direction in the Y-axis direction and the positive power direction in the X-axis direction is selected. As a result, the collimating element 2424 applies positive power different in the Y-axis direction and the X-axis direction to the reflected beam RB, which is longitudinal in the Y-axis direction. That is, the collimating element 2424 applies the positive power different on the first reference plane S1 and the second reference plane S2 to the reflected beam RB, which is longitudinal along the first reference plane S1. As a result, the bandpass element 422 limits the transmission of the reflected beam RB, which has been subjected to the optical effect by the collimating element 2424 in the light receiving optical system 2042, to the near-infrared range.

In this manner, the collimating element 2424 of the light receiving optical system 2042 according to the second embodiment collimates the reflected beam RB transmitted through the aperture unit 410 and transmits the collimated reflected beam PB to the bandpass element 422. This makes it possible to suppress the reflected beam RB, which has an intensity distribution in the X-axis direction along the second reference plane S2, from being limited in transmission by the bandpass element 422 depending on the angle of incidence to the optical sensor 10. Therefore, it is possible to improve the reliability of the effect of ensuring the dynamic range. Furthermore, the second embodiment can also achieve the similar effects to those achieved by the first embodiment.

### (Third embodiment)

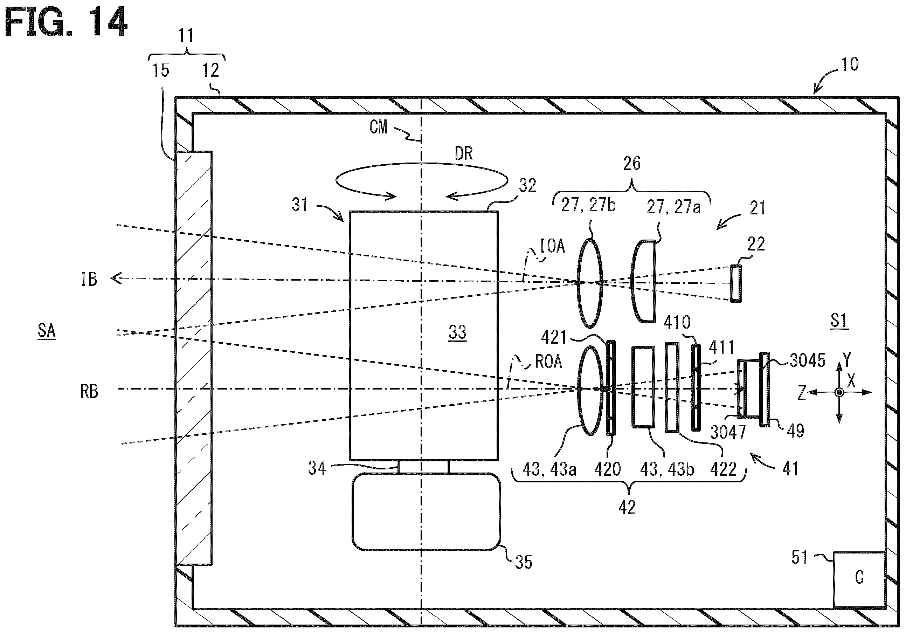

A third embodiment is a modified example of the first embodiment, as shown in FIGS. 14 to 16.

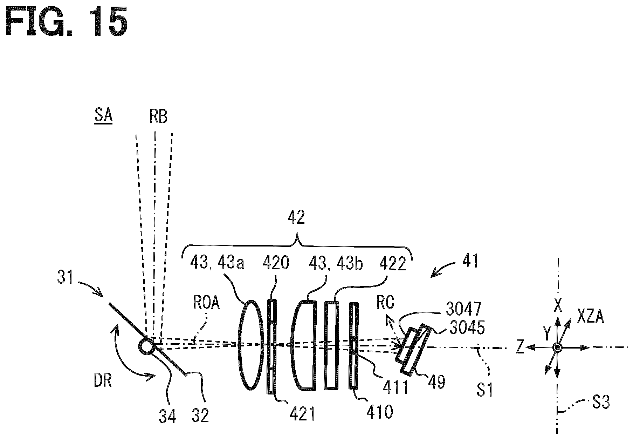

In a light receiving unit 3045 according to a third embodiment, it is defined an inclined axis XZA that is perpendicular to the Y axis and is inclined at an acute angle on one side about the Y axis and an obtuse angle on the opposite side about the Y axis with respect to both of the light receiving optical axis ROA (i.e., the Z axis) and the X axis. Under this definition, the array surface 3047 of the light receiving elements 46 in the light receiving unit 3045 is positioned in an orientation that expands in a set direction of the inclined axis XZA and in the Y-axis direction. As a result, the array surface 3047 is disposed to be inclined with respect to the first reference plane S1 and also with respect to the third reference plane S3. Here, in a cross section (see FIG. 15) that is perpendicular to the Y axis and includes the light receiving optical axis ROA, the array surface 3047 may be inclined so that any of sides opposite in the X-axis direction with respect to the light receiving optical axis ROA may be close to the light receiving optical axis ROA.

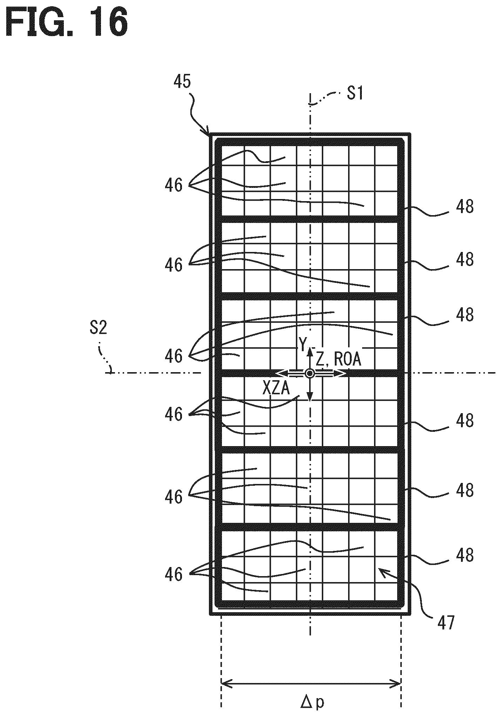

As shown in FIG. 16, even in the array surface 3047 arranged in the inclined manner, the light receiving elements 46 are arrayed in the set direction of the inclination axis XZA and the Y-axis direction as the two-dimensional directions along the first reference plane S1 and the second reference plane S2. In addition to this, the light receiving pixel 48, each of which is composed of a set number of light receiving elements 46, are also arrayed in the Y-axis direction as the one-dimensional direction along the first reference plane S1 on the array surface 3047 arranged in the inclined manner. Furthermore, as shown in FIG. 15, the direction of reflection of a retroreflected component RC of the reflected beam RB by the array surface 47 arranged in the inclined manner is adjusted so as to apart from the light receiving optical axis ROA as well as from the optical aperture 411 of the aperture unit 410 due to the inclined arrangement.

In this manner, in the light receiving unit 3045 of the third embodiment, the array surface 3047 of the light receiving elements 46 is disposed at an angle with respect to the first reference plane S1. As a result, it is possible to guide the retroreflected component RC of the reflected beam RB by the light receiving unit 3045 in a direction away from the light receiving optical axis ROA, thereby suppressing an occurrence of a ghost beam due to the retroreflected component RC. Therefore, it is less likely that the resolution and dynamic range will be hindered by the ghost beam.

In the light receiving unit 3045 of the third embodiment, the retroreflected component RC of the reflected beam RB by the array surface 3047 of the light receiving elements 46 is guided so as to be off the optical aperture 411 in the aperture unit 410 due to the inclined arrangement of the array surface 3047. As a result, it is possible restrict intrusion of a ghost beam that is caused when the reflected beam RB, which has an intensity distribution in the X-axis direction along the second reference plane S2, enters the optical aperture 411 by the retroreflection on the light receiving unit 3045 and is further reflected by the aperture unit 410. Therefore, the dynamic range in particular is less likely to be hindered by the ghost beam.

Furthermore, the third embodiment can also achieve the similar effects to those achieved by the first embodiment. The third embodiment may be implemented in combination with the second embodiment.

### (Fourth embodiment)

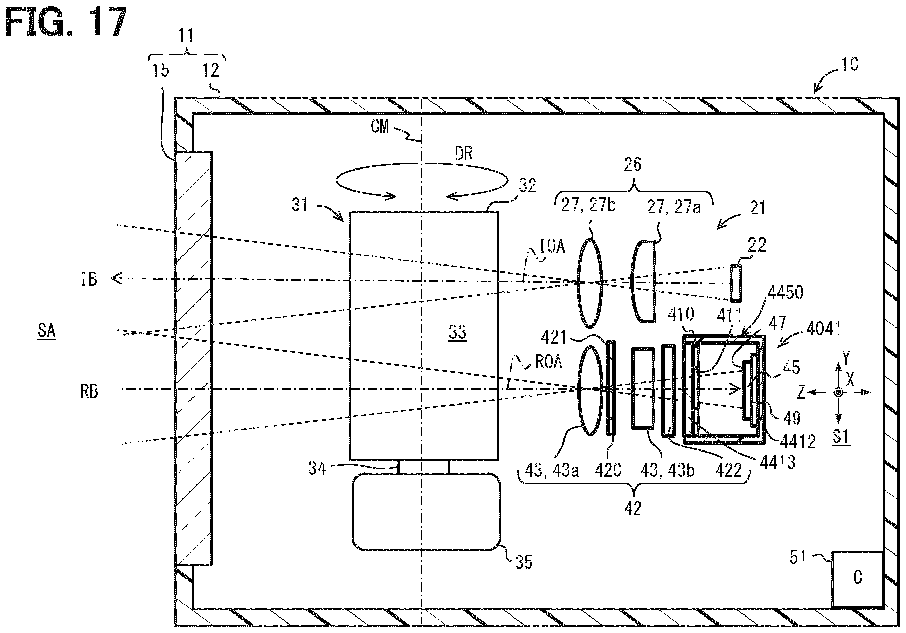

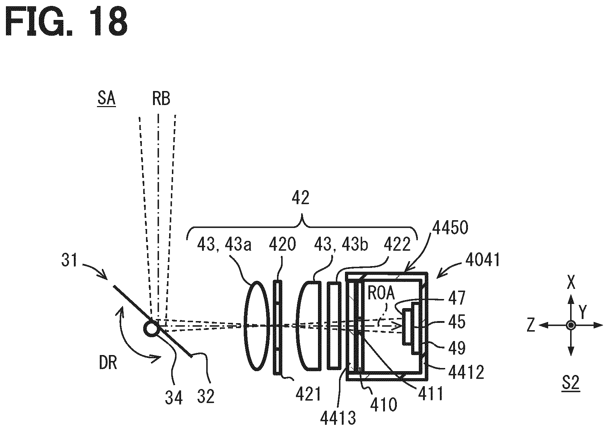

A fourth embodiment is a modified example of the first embodiment, as shown in FIGS. 17 and 18.

A light receiving unit 4041 of the fourth embodiment is provided with a module case 4412. The module case 4412 is made of a material, such as synthetic resin, metal, or ceramics, that has a light shielding property. The module case 4412 has a box shape smaller than the light-shielding case 12 as a whole, and is disposed in the housing 11. The module case 4412 is composed of a single part or a combination of multiple parts. The module case 4412 accommodates and holds the light receiving unit 45 and the aperture unit 410 therein. As a result, the light receiving unit 45 is packaged together with the aperture unit 410 to form a light reception module 4450.

A through-hole formed in the module case 4412 is entirely covered by a module cover 4413. As a result, the light receiving unit 45 and the aperture unit 410 are sealed in a mounted state within the module case 4412. The module cover 4413 is mainly made of a base material, such as synthetic resin or glass, that is transparent to a light in the near-infrared range. The module cover 4413 has a flat plate shape as a whole. The aperture unit 410 is overlaid and joined onto an exit surface of the module cover 4413, from which the reflected beam RB exits toward the aperture unit 410. An incident surface of the module cover 4413 on which the reflected beam RB from the bandpass element 422 is incident may be covered with an anti-reflection film that restricts reflection of the reflected beam RB and the like.

The fourth embodiment can also achieve the similar effects to those achieved by the first embodiment. The fourth embodiment may be implemented in combination with at least one of the second embodiment or the third embodiment.

### (Fifth embodiment)

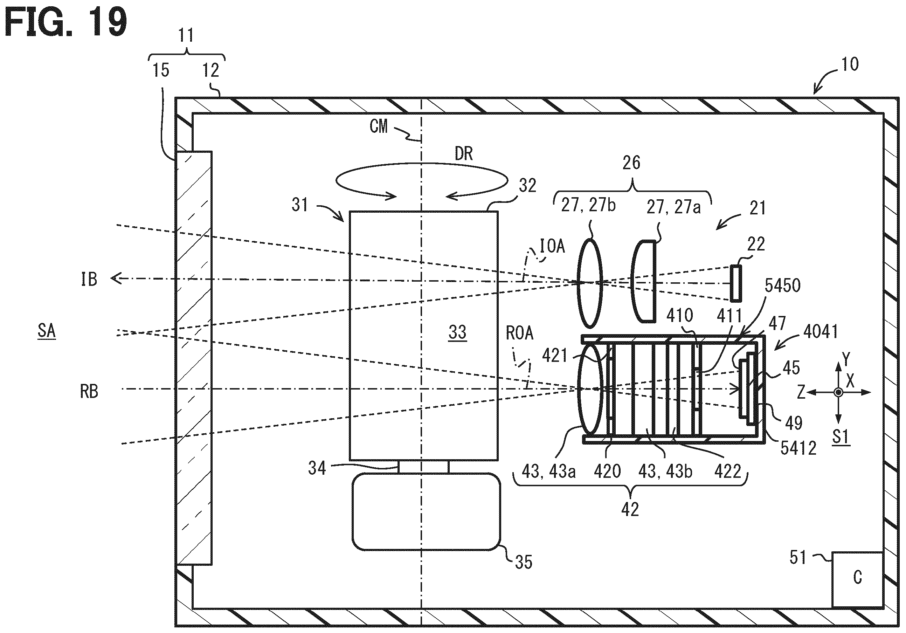

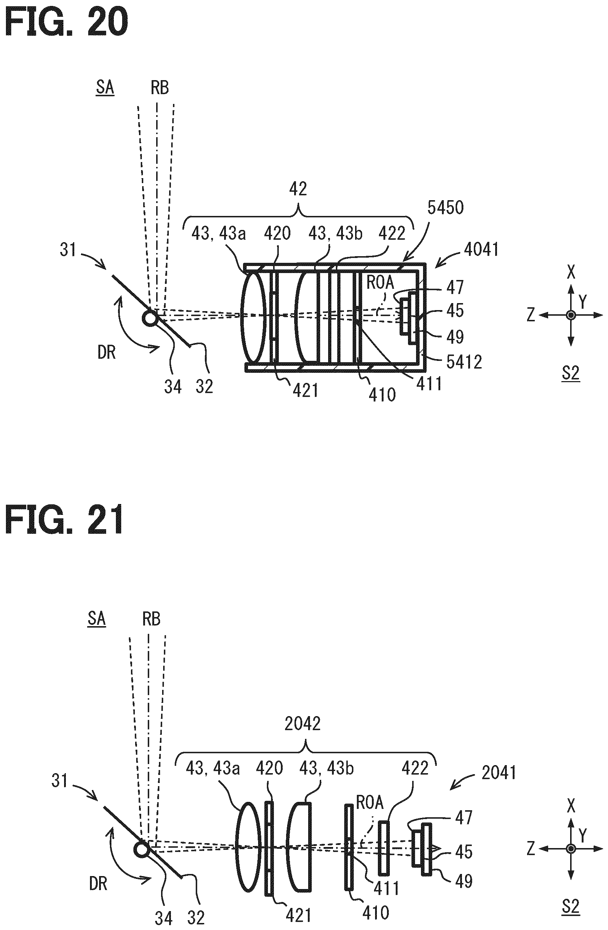

A fifth embodiment is a modified example of the fourth embodiment, as shown in FIGS. 19 and 20.

The module case 5412 of the fifth embodiment accommodates and holds therein the light receiving optical system 42, in addition to the aperture unit 410 and the light receiving unit 45. As a result, the light receiving optical system 42 is packaged together with the aperture unit 410 and the light receiving unit 45 to form a light reception module 5450.

A through-hole formed in the module case 5412 is entirely covered by the rotationally symmetric lens 43a that is located at an upstream-most position in the light receiving optical system 42. As a result, the aperture unit 410 and the light receiving unit 45 as well as the elements 420, 43b, and 422 located downstream of the rotationally symmetric lens 43a in the light receiving optical system 42 are sealed in a mounted state within the module case 5412.

The fifth embodiment can also achieve the similar effects to those achieve by the first embodiment. The fifth embodiment may be implemented in combination with at least one of the second embodiment or the third embodiment.

### (Other embodiments)

Although several embodiments have been described above, the present disclosure should not be construed as being limited to those embodiments, and can be applied to various embodiments and combinations within the scope that does not depart from the gist of the present disclosure.

In a modified example, the X-axis direction may be set to the vertical direction of the vehicle, and the Y-axis and Z-axis directions may be set to the horizontal direction of the vehicle. In a modified example, the light receiving element 46 may be mainly composed of a photodiode or the like, other than the SPAD, for example. In a modified example, the light receiving pixels 48 each including a set number of the light receiving elements 46 may be arrayed in two-dimensional directions.

In a modified example of the light receiving optical systems 42, 2042, the apodization element 420 may be disposed upstream of the rotationally symmetric lens 43a. In a modified example of the apodization element 420, the light-shielding film that limits the transmittance to substantially zero may be omitted from the outermost peripheral portion 421. In a modified example of the light receiving optical system 42, the bandpass element 422 may be arranged in any of the following locations: upstream of the rotationally symmetric lens 43a; between the rotationally symmetric lens 43a and the apodization element 420; or between the apodization element 420 and the cylindrical lens 43b. In a modified example, the bandpass element 422 may be omitted from the light receiving optical system 42. In a modified example, the collimating element 2424 may be omitted from the light receiving optical system 2042, as shown in FIG. 21.

In a modified example, the light receiving lens 43, which is to be combined with the rotationally symmetric lens 43a, may be a rotationally asymmetric lens such as a toric lens, as long as the combination enables the positive power different in the Y-axis direction and the X-axis direction and the focal position as described in the first embodiment. In a modified example, the light receiving lens 43 may be a single lens or three or more lenses, as long as the light receiving lens 43 enables the positive power different in the Y-axis direction and the X-axis direction and the focal position as described in the first embodiment.

In a modified example, the emission lens 27, which is to be combined with the rotationally symmetric lens 27b, may be a rotationally asymmetric lens such as a toric lens, as long as the combination enables the positive power different in the Y-axis direction and the X-axis direction as described in the first embodiment. In a modified example, the emission lens 27 may be a single lens or three or more lenses, as long as the emission lens 27 enables the positive power different in the Y-axis direction and the X-axis direction as described in the first embodiment.

In modified examples, the scanning unit 31 may not be limited to a mechanical oscillation type limited to scanning in the horizontal direction as described in the first embodiment, but may employ various drive methods, such as a mechanical oscillation type limited to scanning in the vertical direction, or a mechanical oscillation type in both the horizontal and vertical directions. In modified examples, the scanning unit 31 may employ various scanning methods, such as a rotary type, a MEMS (Micro Electro Mechanical Systems) type, or a Lissajous type.

### (Additional Note)

This specification discloses several technical ideas and several combinations thereof, as listed hereinbelow.

### (Technical Idea 1)

An optical sensor, which performs sensing by emitting a line-shaped emission beam (IB) towards a sensing area (SA) in an external field and receiving a reflected beam (RB) on an optical axis (ROA) from the sensing area in response to the emission beam, includes:
a light receiving optical system (42, 2042) that defines, as a reference, a first reference plane (S1) and a second reference plane (S2) perpendicular to each other, applies positive power different on the first reference plane and the second reference plane to the reflected beam that is longitudinal along the first reference plane, and is configured to attenuate a transmittance of the reflected beam as a function of distance from the optical axis along the second reference plane;
an aperture unit (410) that is aligned with a focal point (PF2) on the second reference plane by the light receiving optical system and has an optical aperture (411) along the first reference plane to transmit the reflected beam which has been subjected to an optical effect by the light receiving optical system; and
a light receiving unit (45, 3045) that is aligned with a focal point (PF1) on the first reference plane by the light receiving optical system and includes a plurality of light receiving elements (46) arrayed in two-dimensional directions along the first reference plane and the second reference plane to receive the reflected beam that has transmitted through the optical aperture.

### (Technical Idea 2)

In the optical sensor as described in the technical idea 1, the light receiving optical system includes an apodization element (420) that is aligned at a conjugate point with respect to an array surface (47, 3047) of the light receiving elements in the light receiving unit and configured to attenuate the transmittance of the reflected beam as a function of distance from the optical axis along the second reference plane.

### (Technical Idea 3)

In the optical sensor as described in the technical idea 1 or 2, a size (Δa) of the optical aperture in a direction along the second reference plane is referred to as an allowable distance, and the aperture unit is aligned within an allowable distance along the optical axis from the focal point (PF2) on the second reference plane by the light receiving optical system.

### (Technical Idea 4)

In the optical sensor as described in any one of the technical ideas 1 to 3, the light receiving optical system includes a bandpass element (422) that limits transmission of the reflected beam to a set band of the emission beam.

### (Technical Idea 5)

In the optical sensor as described in the technical idea 4, the light receiving optical system (2042) includes a collimating element (2424) that collimates the reflected beam that has transmitted through the aperture unit and transmits the collimated reflected beam to the bandpass element.

### (Technical Idea 6)

In the optical sensor as described in any one of the technical ideas 1 to 5,
the light receiving unit has a plurality of light receiving pixels (48) each including a set number of the light receiving elements as a unit for reading out a light receiving signal, and
a size (Δp) of the light receiving pixels in a direction along the second reference plane is referred to as an allowable distance, and an array surface (47, 3047) of the light receiving elements in the light receiving unit is aligned within the allowable distance along the optical axis from the focal point (PF1) on the first reference plane by the light receiving optical system.

### (Technical Idea 7)

In the optical sensor as described in any one of the technical ideas 1 to 6, a plurality of single photon avalanche diodes as the light receiving elements are arrayed in two-dimensional directions along the first reference plane and the second reference plane.

### (Technical Idea 8)

In the optical sensor as described in any one of the technical ideas 1 to 7, an array surface (3047) of the light receiving elements in the light receiving unit (3045) is disposed to incline with respect to the first reference plane.

### (Technical Idea 9)

In the optical sensor as described in the technical idea 8, the array surface of the light receiving elements in the light receiving unit is inclined to offset a retroreflection component (RC) of the reflected beam by the array surface (3047) of the light receiving elements from the optical aperture.

### (Technical Idea 10)

The optical sensor as described in any one of the technical ideas 1 to 9 includes a scanning unit (31) that scans the emission beam toward the sensing area and reflect the reflected beam toward the light receiving optical system.

### (Technical Idea 11)

In the optical sensor as described in any one of the technical ideas 1 to 10, the light receiving unit is packaged together with the aperture unit to form a light reception module (4450).

### (Technical Idea 12)

In the optical sensor as described in any one of the technical ideas 1 to 10, the light receiving optical system is packaged together with the light receiving unit and the aperture unit to form a light reception module (5450).

### (Technical Idea 13)

A light reception module is applied to the optical sensor as described in any one of the technical ideas 1 to 12, and is configured by packaging the light receiving optical system together with the light receiving unit and the aperture unit.

## Claims

1. An optical sensor, which performs sensing by emitting a line-shaped emission beam (IB) towards a sensing area (SA) in an external field and receiving a reflected beam (RB) on an optical axis (ROA) from the sensing area in response to the emission beam, comprising:
a light receiving optical system (42, 2042) that defines a first reference plane (S1) and a second reference plane (S2) perpendicular to each other as a reference, applies positive power different on the first reference plane and the second reference plane to the reflected beam that is longitudinal along the first reference plane, and is configured to attenuate a transmittance of the reflected beam as a function of distance from the optical axis along the second reference plane;
an aperture unit (410) that is aligned with a focal point (PF2) on the second reference plane by the light receiving optical system and has an optical aperture (411) along the first reference plane to transmit the reflected beam which has been subjected to an optical effect by the light receiving optical system; and
a light receiving unit (45, 3045) that is aligned with a focal point (PF1) on the first reference plane by the light receiving optical system and includes a plurality of light receiving elements (46) arrayed in two-dimensional directions along the first reference plane and the second reference plane to receive the reflected beam that has transmitted through the optical aperture.

2. The optical sensor according to claim 1, wherein
the light receiving optical system includes an apodization element (420) that is aligned at a conjugate point with respect to an array surface (47, 3047) of the light receiving elements in the light receiving unit and configured to attenuate the transmittance of the reflected beam as a function of distance from the optical axis along the second reference plane.

3. The optical sensor according to claim 1 or 2, wherein
a size (Δa) of the optical aperture in a direction along the second reference plane is referred to as an allowable distance, and
the aperture unit is aligned within the allowable distance along the optical axis from the focal point (PF2) on the second reference plane by the light receiving optical system.

4. The optical sensor according to claim 1 or 2, wherein
the light receiving optical system includes a bandpass element (422) that limits transmission of the reflected beam to a set band of the emission beam.

5. The optical sensor according to claim 4, wherein
the light receiving optical system (2042) includes a collimating element (2424) that collimates the reflected beam that has transmitted through the aperture unit and transmits the collimated reflected beam to the bandpass element.

6. The optical sensor according to claim 1 or 2, wherein
the light receiving unit has a plurality of light receiving pixels (48) each including a set number of the light receiving elements as a unit for reading out a light receiving signal,
a size (Δp) of the light receiving pixels in a direction along the second reference plane is referred to as an allowable distance, and
an array surface (47, 3047) of the light receiving elements in the light receiving unit is aligned within the allowable distance along the optical axis from the focal point (PF1) on the first reference plane by the light receiving optical system.

7. The optical sensor according to claim 1 or 2, wherein
the plurality of light receiving elements includes a plurality of single photon avalanche diodes arrayed in two-dimensional directions along the first reference plane and the second reference plane.

8. The optical sensor according to claim 1 or 2, wherein
an array surface (3047) of the light receiving elements in the light receiving unit (3045) is disposed to incline with respect to the first reference plane.

9. The optical sensor according to claim 8, wherein
the array surface of the light receiving elements in the light receiving unit is inclined to offset a retroreflection component (RC) of the reflected beam by the array surface (3047) of the light receiving elements from the optical aperture.

10. The optical sensor according to claim 1 or 2, further comprising:
a scanning unit (31) that scans the emission beam toward the sensing area and reflects the reflected beam toward the light receiving optical system.

11. The optical sensor according to claim 1 or 2, wherein
the light receiving unit is packaged together with the aperture unit to form a light reception module (4450).

12. The optical sensor according to claim 1 or 2, wherein
the light receiving optical system is packaged together with the light receiving unit and the aperture unit to form a light reception module (5450).

13. A light reception module applied to the optical sensor according to claim 1 or 2, in which the light receiving optical system is packaged together with the light receiving unit and the aperture unit.
